# EUROPÄISCHE PATENTSCHRIFT

(11) **EP 4 147 337 B1**
(45) Veröffentlichungstag und Bekanntmachung des Hinweises auf die Patenterteilung: **06.09.2023**
(21) Anmeldenummer: 21739587.0
(22) Anmeldetag: 25.06.2021
(51) Int. Cl.: H02M 1/32

(54) **FEHLERTOLERANTER BETRIEB EINES STROMRICHTERS**
FAULT TOLERANT OPERATION OF A POWER CONVERTER
LE FONCTIONNEMENT À TOLÉRANCE DE FAUTES D'UN CONVERTISSEUR DE PUISSANCE

(30) Priorität: 12.08.2020 EP 20190711
(43) Veröffentlichungstag der Anmeldung: 15.03.2023
(73) Patentinhaber: Siemens Aktiengesellschaft, 80333 München (DE)
(72) Erfinder: PFEIFER, Markus, 90455 Nürnberg (DE)
(74) Vertreter: Siemens Patent Attorneys
(86) Internationale Anmeldenummer: PCT/EP2021/067449
(87) Internationale Veröffentlichungsnummer: WO 2022/033755

(56) Entgegenhaltungen:
- WO-A1-2016/005092
- WO-A1-2016/169817
- DE-A1-102017 218 189

## Beschreibung

Die Erfindung betrifft ein Verfahren zum Betrieb eines elektronischen Moduls gemäß Anspruch 1 und eine Vorrichtung, umfassend ein elektronisches Modul.

Elektronische Module, beispielsweise Umrichter, Gleichrichter oder Wechselrichter, mit mehreren Halbleiterelementen, insbesondere Leistungshalbleiterelementen, können bei einem Defekt eines der Halbleiterelemente normalerweise nicht weiterbetrieben werden. Dadurch können erhebliche Ausfallkosten entstehen.

Die Offenlegungsschrift WO 2016 005 092 A1 beschreibt einen Umrichter mit einem Zwischenkreis zum Bereitstellen einer Gleichspannung zwischen einer Plusleitung und einer Minusleitung, einer Phasenleitung zum Empfangen und/oder Ausgeben einer Wechselspannung und einer Halbbrückenschaltung mit einer ersten Schalteranordnung zum Verbinden der Plusleitung mit der Phasenleitung und einer zweiten Schalteranordnung zum Verbinden der Minusleitung mit der Phasenleitung. Bei einem Defekt eines Halbleiterschalters des Umrichters soll sich der Umrichter selbst sichern und weiterbetrieben werden können. Hierzu weist die erste Schalteranordnung und die zweite Schalteranordnung jeweils eine Parallelschaltung aus mehreren Schaltzweigen auf und in jedem Schaltzweig ist einer der Halbleiterschalter mit einer eigenen, in Reihe zur Schaltstrecke des Halbleiterschalters geschalteten Schmelzsicherung bereitgestellt.

Die Offenlegungsschrift WO 2016 169 817 A1 beschreibt ein Verfahren zum Steuern eines Umrichters, wobei eine Plusleitung und eine Minusleitung eines Zwischenkreises durch eine Halbbrücke jeweils über mehrere Halbleiterschalter mit einem Wechselspannungs-Phasenleiter verschaltet sind, wobei jeder Halbleiterschalter jeweils eine eigene, in Reihe geschaltete Schmelzsicherung aufweist. Der Umrichter soll bei einem Dauerkurzschluss durch einen der Halbleiterschalter robust reagieren. Das Verfahren umfasst hierzu das Detektieren des defekten Halbleiterschalters, der dauerhaft in einem elektrisch leitenden Zustand verharrt, und ein schrittweises Aufschmelzen der Schmelzsicherung des defekten Halbleiterschalters durch mehrmaliges miteinander Kurzschließen der Plusleitung und der Minusleitung über den defekten Halbleiterschalter und über mindestens zwei weitere der Halbleiterschalter. Jeder Kurzschluss dauert nur jeweils eine Pulszeitdauer, die kleiner ist als eine Schmelzzeitdauer, die die Schmelzsicherung bei durchgängigem Kurzschluss zum Aufschmelzen benötigt.

Die Offenlegungsschrift DE 10 2017 218 189 A1 beschreibt einen Wechselrichter, welcher zum Steuern einer elektrischen Maschine an einer Spannungsquelle mit einem ersten und einem zweiten Potential eingerichtet ist. Dabei umfasst der Wechselrichter mehrere Brückenschaltungen, die jeweils ein erstes Stromventil, ein zweites Stromventil und einen Anschluss für die elektrische Maschine umfassen, und eine erste Schnittstelle zur Entgegennahme individueller Steuersignale für die Stromventile und eine zweite Schnittstelle zur Erfassung eines Abschaltsignals. Jedes erste Stromventil ist dazu eingerichtet, Strom zwischen dem hohen elektrischen Potential und dem zugeordneten Anschluss zu steuern, und jedes zweite Stromventil dazu, Strom zwischen dem zugeordneten Anschluss und dem niedrigen elektrischen Potential zu steuern. Eine Abschalteinrichtung ist dazu eingerichtet ist, in Abhängigkeit des Abschaltsignals und unabhängig von Signalen an der ersten Schnittstelle entweder alle ersten oder alle zweiten Stromventile zu schließen.

Der Erfindung liegt die Aufgabe zugrunde, ein verbessertes Verfahren zum Betrieb eines elekrtronischen Moduls sowie eine verbesserte Vorrichtung, umfassend ein elektronisches Modul anzugeben.

Die Aufgabe wird erfindungsgemäß gelöst durch ein Verfahren mit den Merkmalen des Anspruchs 1 und durch eine Vorrichtung, mit den Merkmalen des Anspruchs 6.

Vorteilhafte Ausgestaltungen der Erfindung sind Gegenstand der Unteransprüche.

Bei einem erfindungsgemäßen Verfahren zum Betrieb eines elektronischen Moduls, umfassend mindestens drei Halbleiterelemente, wird bei Defekt eines der Halbleiterelemente mittels einer gezielten Ansteuerung von mindestens zweien der übrigen Halbleiterelemente ein Strom über das defekte Halbleiterelement geleitet, um das defekte Halbleiterelement oder eine diesem zugeordnete Schwachstelle zu zerstören oder aufzutrennen, wobei dieser Strom auf die gezielt angesteuerten Halbleiterelemente aufgeteilt wird.

Mit dem so unterbrochenen Halbleiterelement kann das Modul zunächst weiterbetrieben werden, gegebenenfalls nicht mit voller Leistung, da nicht alle Schaltmuster geschaltet werden können. Ein Teillastbetrieb bleibt jedoch möglich.

Die Halbleiterelemente können beispielsweise als Halbleiterschalter, insbesondere Feldeffekttransistoren, Bipolartransistoren, IGBT, Thyristoren oder als Dioden etc. ausgebildet sein. Die Halbleiterschalter können beispielsweise mittels einer Pulsweitenmodulation angesteuert werden.

Fener umfasst das elektronische Modul mindestens sechs Halbleiterelemente, die in drei Halbbrücken mit jeweils einem oberen Zweig und einem unteren Zweig angeordnet sind.

Darüber hinaus werden bei Defekt eines der Halbleiterelemente im oberen Zweig in einer der Halbbrücken die beiden Halbleiterelemente im oberen Zweig der anderen beiden Halbbrücken gezielt angesteuert, um das defekte Halbleiterelement oder die diesem zugeordnete Schwachstelle zu zerstören oder aufzutrennen, wobei bei Defekt eines der Halbleiterelemente im unteren Zweig in einer der Halbbrücken die beiden Halbleiterelemente im unteren Zweig der anderen beiden Halbbrücken gezielt angesteuert werden, um das defekte Halbleiterelement oder die diesem zugeordnete Schwachstelle zu zerstören oder aufzutrennen.

In einer Ausführungsform wird das Verfahren zum Betrieb eines zur Gleichrichtung oder Umrichtung einer Wechselspannung mit drei Phasen ausgebildeten elektronischen Moduls verwendet.

In einer Ausführungsform erfolgt die gezielte Ansteuerung der beiden Halbleiterelemente zu einem Zeitpunkt, an dem an den jeweils nicht vom defekten Halbleiterelement betroffenen Phasen die gleichen Spannungsverhältnisse gegenüber der vom defekten Halbleiterelement betroffenen Phase vorliegen oder innerhalb eines Toleranzbereichs um den genannten Zeitpunkt, in dem die genannten Spannungsverhältnisse weitgehend gleich sind, insbesondere bei einem Spannungsunterschied von weniger als 4 Volt zwischen den nicht vom defekten Halbleiterelement betroffenen Phasen gegenüber der vom defekten Halbleiterelement betroffenen Phase.

In einer Ausführungsform werden die beiden Halbleiterelemente an den jeweils nicht vom defekten Halbleiterelement betroffenen Phasen zu dem genannten Zeitpunkt eingeschaltet, so dass ein Kurzschlussstrom fließt, der sich auf die beiden Halbleiterelemente aufteilt, während über das defekte Halbleiterelement der komplette Kurzschlussstrom fließt. Damit wird erreicht, das defekte Halbleiterelement oder die diesem zugeordnete Schwachstelle vollständig zu zerstören oder aufzutrennen und die übrigen Halbleiterelemente dabei betriebsfähig zu erhalten.

In einer Ausführungsform wird die gezielte Ansteuerung der beiden Halbleiterelemente bis zur Zerstörung oder Auftrennung des defekten Halbleiterelements oder der diesem zugeordneten Schwachstelle wiederholt, insbesondere dann, wenn es bei einmaliger Ansteuerung nicht zur beabsichtigten Zerstörung oder Auftrennung kommt. Daher wird der Vorgang unter gleichen Bedingungen solange wiederholt, bis die beabsichtigte Zerstörung oder Auftrennung eintritt, so dass kein Kurzschlussstrom durch das defekte Halbleiterelement mehr fließt.

Eine Vorrichtung gemäß einem Aspekt der vorliegenden Erfindung umfasst ein elektronisches Modul, umfassend mindestens drei Halbleiterelemente, und eine Steuereinrichtung, die zur Detektion von Defekten der Halbleiterelemente und zur Durchführung des Verfahrens nach einem der vorhergehenden Ansprüche ausgebildet ist, um ein defektes Halbleiterelement oder eine diesem zugeordnete Schwachstelle zu zerstören oder aufzutrennen.

In einer Ausführungsform ist die Schwachstelle als ein Bonddraht des Halbleiterelements ausgebildet, der so dimensioniert ist, dass er einen vorgegebenen Betriebsstrom und einen innerhalb einer vorgegebenen Grenze darüber hinausgehenden Strom, tragen kann, nicht jedoch einen Kurzschlussstrom oder einen wiederholt angelegten Kurzschlussstrom.

In einer Ausführungsform ist die Schwachstelle alternativ oder zusätzlich als eine Verjüngung einer Kupferschicht an einem Anschluss des Halbleiterelements auf einer Leiterplatte (insbesondere DCB oder PCB) ausgebildet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
FIG 1 ist ein schematisches Schaltbild eines Moduls mit mehreren Halbleiterelementen, und
FIG 2 ist ein schematisches Diagramm einer dreiphasigen Wechselspannung.

Einander entsprechende Teile sind in den Figuren mit denselben Bezugszeichen versehen.

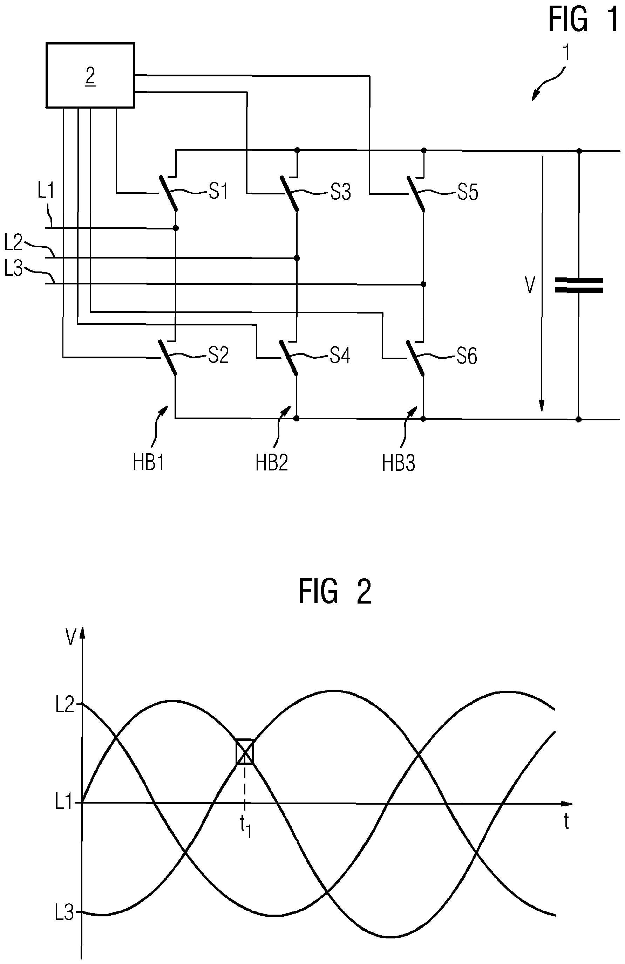

Figur 1 ist ein schematisches Schaltbild eines Moduls 1, beispielsweise eines Umrichtermoduls, mit mehreren Halbleiterelementen S1 bis S6, die mittels einer Steuereinrichtung 2 gezielt ansteuerbar sind. Das Modul 1 ist beispielsweise als ein Umrichtermodul zum Umrichten einer dreiphasigen Wechselspannung mit den Phasen L1, L2 und L3 zunächst in eine Gleichspannung V ausgebildet. In diesem Fall sind die Halbleiterelemente S1 bis S6 beispielsweise als Halbleiterschalter, insbesondere Feldeffekttransistoren, Bipolartransistoren, IGBT, Thyristoren oder als Dioden etc. ausgebildet und in drei Halbbrücken HB1 bis HB3 angeordnet. Die Halbleiterschalter können beispielsweise mittels einer Steuereinrichtung 2 angesteuert werden, die eine Pulsweitenmodulation durchführt.

Ist eines der Halbleiterelemente S1 bis S6, beispielsweise das Halbleiterelement S3 im oberen Zweig der Halbbrücke HB2, in einem herkömmlichen Modul 1 defekt, so ist ein Weiterbetrieb des Moduls 1 nicht möglich. Dadurch können erhebliche Ausfallkosten entstehen.

Gemäß der vorliegenden Erfindung kann im Modul 1 gezielt eine Schwachstelle für das Halbleiterelement S3, insbesondere je eine Schwachstelle für jedes der Halbleiterelemente S1 bis S6, vorgesehen sein. Alternativ oder zusätzlich kann mittels einer gezielten Modulation ein defektes Halbleiterelement S1 bis S6, beispielsweise das Halbleiterelement S3, außer Betrieb gesetzt werden. Auf diese Weise bleibt ein Teilbetrieb des Moduls 1 möglich. Im Folgenden wird beschrieben, wie die Modulation erfolgt.

Figur 2 ist ein schematisches Diagramm der an den Phasen L1, L2, L3 anliegenden dreiphasigen Wechselspannung, wobei die Spannung V über der Zeit t dargestellt ist. Das defekte Halbleiterelement S3 dient zusammen mit dem Halbleiterelement S4 der Gleichrichtung der Wechselspannung der Phase L2. Zu einem Zeitpunkt t1 liegen an den Halbleiterelementen S1 und S5 im oberen Zweig der Halbbrücken HB1 und HB3, das heißt an den Phasen L1 und L3 die gleichen Spannungsverhältnisse gegenüber L2 und damit gegenüber dem defekten Halbleiterelement S3 vor. Die Halbleiterelemente S1 und S5 werden zum Zeitpunkt t1 oder innerhalb eines Toleranzbereichs um den Zeitpunkt t1, in dem die genannten Spannungsverhältnisse weitgehend gleich sind, eingeschaltet, so dass ein Kurzschlussstrom fließt, der sich auf die Halbleiterelemente S1 und S5 aufteilt, während über das defekte Halbleiterelement S3 der komplette Kurzschlussstrom fließt. Dabei ist das Ziel, das defekte Halbleiterelement S3 oder eine diesem zugeordnete Schwachstelle vollständig zu zerstören oder aufzutrennen und die übrigen Halbleiterelemente S1, S2, S4 bis S6 dabei betriebsfähig zu erhalten. Kommt es bei dieser Einschaltung nicht zur beabsichtigten Zerstörung oder Auftrennung, so kann der Vorgang unter gleichen Bedingungen so lange wiederholt werden, bis die beabsichtigte Zerstörung oder Auftrennung eintritt, so dass kein Kurzschlussstrom durch das defekte Halbleiterelement S3 mehr fließt. Mit dem so unterbrochenen Halbleiterelement S3 kann das Modul 1 zunächst weiterbetrieben werden, gegebenenfalls nicht mit voller Leistung, da nicht alle Schaltmuster geschaltet werden können. Ein Teillastbetrieb bleibt jedoch möglich.

Die Schwachstelle kann beispielsweise ein Bonddraht des Halbleiterelements S1 bis S6 sein, der so dimensioniert ist, dass er einen vorgegebenen Betriebsstrom und einen innerhalb einer vorgegebenen Grenze darüber hinausgehenden Strom, beispielsweise ein bestimmtes Vielfaches des vorgegebenen Betriebsstroms, tragen kann, nicht jedoch den Kurzschlussstrom oder den wiederholt angelegten Kurzschlussstrom. Ebenso kann die Schwachstelle als eine Verjüngung einer Kupferschicht am Anschluss des Halbleiterelements S1 bis S6 auf einer Leiterplatte (insbesondere DCB oder PCB) ausgebildet sein.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Betrieb eines elektronischen Moduls (1) umfassend mindestens drei Halbleiterelemente (S1 bis S6), wobei bei Defekt eines der Halbleiterelemente (S1 bis S6) mittels einer gezielten Ansteuerung von mindestens zweien der übrigen Halbleiterelemente (S1 bis S6) ein Strom über das defekte Halbleiterelement (S1 bis S6) geleitet wird, um das defekte Halbleiterelement (S1 bis S6) oder eine diesem zugeordnete Schwachstelle zu zerstören oder aufzutrennen, wobei dieser Strom auf die gezielt angesteuerten Halbleiterelemente (S1 bis S6) aufgeteilt wird,
wobei das elektronische Modul (1) mindestens sechs Halbleiterelemente (S1 bis S6) umfasst, die in drei Halbbrücken (HB1 bis HB3) mit jeweils einem oberen Zweig und einem unteren Zweig angeordnet sind,
**dadurch gekennzeichnet, dass**
bei Defekt eines der Halbleiterelemente (S1, S3, S5) im oberen Zweig in einer der Halbbrücken (HB1 bis HB3) die beiden Halbleiterelemente (S1, S3, S5) im oberen Zweig der anderen beiden Halbbrücken (HB1 bis HB3) gezielt angesteuert werden, um das defekte Halbleiterelement (S1, S3, S5) oder die diesem zugeordnete Schwachstelle zu zerstören oder aufzutrennen,
wobei bei Defekt eines der Halbleiterelemente (S2, S4, S6) im unteren Zweig in einer der Halbbrücken (HB1 bis HB3) die beiden Halbleiterelemente (S2, S4, S6) im unteren Zweig der anderen beiden Halbbrücken (HB1 bis HB3) gezielt angesteuert werden, um das defekte Halbleiterelement (S2, S4, S6) oder die diesem zugeordnete Schwachstelle zu zerstören oder aufzutrennen.

2. Verfahren nach Anspruch 1, das zum Betrieb eines zur Gleichrichtung oder Umrichtung einer Wechselspannung mit drei Phasen (L1, L2, L3) ausgebildeten elektronischen Moduls (1) verwendet wird.

3. Verfahren nach einem der vorherigen Ansprüche, wobei die gezielte Ansteuerung der beiden Halbleiterelemente (S1 bis S6) zu einem Zeitpunkt (t1) erfolgt, an dem an den jeweils nicht vom defekten Halbleiterelement (S1 bis S6) betroffenen Phasen (L1 bis L3) die gleichen Spannungsverhältnisse gegenüber der vom defekten Halbleiterelement (S1 bis S6) betroffenen Phase (L1 bis L3) vorliegen oder innerhalb eines Toleranzbereichs um diesen Zeitpunkt (t1), in dem die genannten Spannungsverhältnisse weitgehend gleich sind.

4. Verfahren nach Anspruch 3, wobei die beiden Halbleiterelemente (S1 bis S6) an den jeweils nicht vom defekten Halbleiterelement (S1 bis S6) betroffenen Phasen (L1 bis L3) zum Zeitpunkt (t1) eingeschaltet werden, so dass ein Kurzschlussstrom fließt, der sich auf die beiden Halbleiterelemente (S1 bis S6) aufteilt, während über das defekte Halbleiterelement (S1 bis S6) der komplette Kurzschlussstrom fließt.

5. Verfahren nach einem der vorhergehenden Ansprüche, wobei die gezielte Ansteuerung der beiden Halbleiterelemente (S1 bis S6) bis zur Zerstörung oder Auftrennung des defekten Halbleiterelements (S1 bis S6) oder der diesem zugeordneten Schwachstelle wiederholt wird.

6. Vorrichtung, umfassend ein elektronisches Modul (1), umfassend mindestens drei Halbleiterelemente (S1 bis S6), und eine Steuereinrichtung (2), die zur Detektion von Defekten der Halbleiterelemente (S1 bis S6) und zur Durchführung des Verfahrens nach einem der vorhergehenden Ansprüche ausgebildet ist, um ein defektes Halbleiterelement (S1 bis S6) oder eine diesem zugeordnete Schwachstelle zu zerstören oder aufzutrennen.

7. Vorrichtung nach Anspruch 6, wobei die Schwachstelle als ein Bonddraht des Halbleiterelements (S1 bis S6) ausgebildet ist, der so dimensioniert ist, dass er einen vorgegebenen Betriebsstrom und einen innerhalb einer vorgegebenen Grenze darüber hinausgehenden Strom tragen kann, nicht jedoch einen Kurzschlussstrom oder einen wiederholt angelegten Kurzschlussstrom.

8. Vorrichtung nach Anspruch 6 oder 7, wobei die Schwachstelle als eine Verjüngung einer Kupferschicht an einem Anschluss des Halbleiterelements (S1 bis S6) auf einer Leiterplatte ausgebildet ist.

## Claims

1. Method for operating an electronic module (1) comprising at least three semiconductor elements (S1 to S6), wherein, in the event of a defect in one of the semiconductor elements (S1 to S6), a current is passed via the defective semiconductor element (S1 to S6) by selectively activating at least two of the remaining semiconductor elements (S1 to S6) in order to destroy or open-circuit the defective semiconductor element (S1 to S6) or a weak point associated therewith, wherein this current is distributed between the selectively activated semiconductor elements (S1 to S6), wherein said electronic module (1) comprises at least six semiconductor elements (S1 to S6) disposed in three half-bridges (HB1 to HB3), each having an upper branch and a lower branch
**characterised in that**
in the event of a defect in one of the semiconductor elements (S1, S3, S5) in the upper branch in one of the half-bridges (HB1 to HB3), the two semiconductor elements (S1, S3, S5) in the upper branch of the other two half-bridges (HB1 to HB3) are selectively activated in order to destroy or open-circuit the defective semiconductor element (S1, S3, S5) or the weak point associated therewith,
wherein, if one of the semiconductor elements (S2, S4, S6) in the lower branch in one of the half-bridges (HB1 to HB3) is defective, the two semiconductor elements (S2, S4, S6) in the lower branch of the other two half-bridges (HB1 to HB3) are selectively activated in order to destroy or open-circuit the defective semiconductor element (S2, S4, S6) or the weak point associated therewith.

2. Method according to claim 1, used to operate an electronic module (1) designed to rectify or convert an AC voltage having three phases (L1, L2, L3).

3. Method according to one of the preceding claims, wherein the two semiconductor elements (S1 to S6) are selectively activated at a time (t1) at which the voltage ratios present on the respective phases (L1 to L3) not affected by the defective semiconductor element (S1 to S6) are the same as on the phase (L1 to L3) affected by the defective semiconductor element (S1 to S6), or within a tolerance range around said time (t1) when said voltage ratios are substantially equal.

4. Method according to claim 3, wherein the two semiconductor elements (S1 to S6) on the respective phases (L1 to L3) not affected by the defective semiconductor element (S1 to S6) are activated at time (t1) so that a short-circuit current flows which is divided between the two semiconductor elements (S1 to S6), while the full short-circuit current flows via the defective semiconductor element (S1 to S6).

5. Method according to one of the preceding claims, wherein the selective activation of the two semiconductor elements (S1 to S6) is repeated until the defective semiconductor element (S1 to S6) or the weak point associated therewith is destroyed or open-circuited.

6. Device comprising an electronic module (1) comprising at least three semiconductor elements (S1 to S6), and control means (2) designed to detect defects in the semiconductor elements (S1 to S6) and to perform the method as claimed in one of the preceding claims in order to destroy or open-circuit a defective semiconductor element (S1 to S6) or a weak point associated therewith.

7. Device according to claim 6, wherein the weak point is designed as a bond wire of the semiconductor element (S1 to S6), sized so as to carry a predetermined operating current and a current exceeding it within a predetermined limit, but not a short-circuit current or a repeatedly applied short-circuit current.

8. Device according to claim 6 or 7, wherein the weak point is designed as a narrowing of a copper layer at a connection of the semiconductor element (S1 to S6) on a printed circuit board.

## Revendications

1. Procédé pour faire fonctionner un module (1) électronique comprenant au moins trois éléments (S1 à S6) à semiconducteur, dans lequel, si l'un des éléments (S1 à S6) à semiconducteur est défectueux, on envoie, au moyen d'une commande ciblée, par au moins deux des autres éléments (S1 à S6) à semiconducteur, un courant aux bornes de l'élément (S1 à S6) à semiconducteur défectueux, pour détruire ou séparer l'élément (S1 à S6) à semiconducteur défectueux ou un point de faiblesse, qui lui appartient, dans lequel on répartit ce courant sur les éléments (S1 à S6) à semiconducteur commandés de manière ciblée,
dans lequel le module (1) électronique comprend au moins six éléments (S1 à S6) à semiconducteur, qui sont montés en trois demi-ponts (HB1 à HB3) ayant chacun une branche supérieure et une branche inférieure,
**caractérisé en ce que**
si l'un des éléments (S1, S3, S5) à semiconducteur est défectueux dans la branche supérieure de l'un des demi-ponts (HB1 à HB3), on commande, de manière ciblée, les deux éléments (S1, S3, S5) à semiconducteur dans la branche supérieure des deux autres demi-ponts (HB1 à HB3) pour détruire ou séparer l'élément (S1, S3, S5) à semiconducteur défectueux ou le point de faiblesse, qui lui appartient,
dans lequel, si l'un des éléments (S2, S4, S6) à semiconducteur dans la branche inférieure de l'un des demi-ponts (HB1 à HB3) est défectueux, on commande, de manière ciblée, les deux éléments (S2, S4, S6) à semiconducteur dans branche inférieure des deux autres demi-ponts (HB1 à HB3) pour détruire ou séparer, l'élément (S2, S4, S6) à semiconducteur défectueux ou le point de faiblesse, qui lui appartient.

2. Procédé suivant la revendication 1, que l'on utilise pour faire fonctionner un module (1) électronique constitué pour le redressement ou la conversion d'une tension alternative ayant trois phases (L1, L2, L3).

3. Procédé suivant l'une des revendications précédentes, dans lequel on effectue la commande ciblée des deux éléments (S1 à S6) à semiconducteur à un instant (t1), où il y a, sur les phases (L1 à L3) respectives, qui ne sont pas concernées par l'élément (S1 à S6) à semiconducteur défectueux, les mêmes rapports de tension par rapport aux phases (L1 à L3) concernées par l'élément (S1 à S6) à semiconducteur défectueux ou dans une plage de tolérance autour de cet instant (t1), dans laquelle lesdits rapports de tension sont dans une grande mesure égaux.

4. Procédé suivant la revendication 3, dans lequel on met, à l'état de conduction, à l'instant (t1), les deux éléments (S1 à S6) à semiconducteur sur les phases (L1 à L3) respectives, qui ne sont pas concernées par l'élément (S1 à S6) à semiconducteur défectueux, de manière à ce qu'il passe un courant de court-circuit, qui se répartit sur les deux éléments (S1 à S6) à semiconducteur, tandis que le courant de court-circuit complet passe par l'élément (S1 à S6) à semiconducteur défectueux.

5. Procédé suivant l'une des revendications précédentes, dans lequel on répète la commande ciblée des deux éléments (S1 à S6) à semiconducteur jusqu'à destruction ou séparation de l'élément (S1 à S6) à semiconducteur défectueux ou du point de faiblesse, qui lui appartient.

6. Montage, comprenant un module (1) électronique, comprenant au moins trois éléments (S1 à S6) à semiconducteur et un dispositif (2) de commande, qui est constitué pour la détection de défauts des éléments (S1 à S6) à semiconducteur et pour effectuer le procédé suivant l'une des revendications précédentes, afin de détruire ou de séparer un élément (S1 à S6) à semiconducteur défectueux ou un point de faiblesse, qui lui appartient.

7. Montage suivant la revendication 6, dans lequel le point de faiblesse est constitué sous la forme d'un fil de liaison de l'élément (S1 à S6) à semiconducteur, qui a des dimensions telles qu'il peut porter un courant de fonctionnement donné à l'avance et un courant allant au-delà dans une limite donnée à l'avance, mais non un courant de court-circuit ou un courant de court-circuit appliqué de manière répétée.

8. Montage suivant la revendication 6 ou 7, dans lequel le point de faiblesse est constitué sous la forme d'une diminution d'une couche de cuivre à une borne de l'élément (S1 à S6) à semiconducteur sur une plaquette à circuit imprimé.
